# EUROPÄISCHE PATENTSCHRIFT

(11) **EP 1 905 631 B1**
(45) Veröffentlichungstag und Bekanntmachung des Hinweises auf die Patenterteilung: **21.04.2010**
(21) Anmeldenummer: 06020258.7
(22) Anmeldetag: 27.09.2006
(51) Int. Cl.: B60J 7/057

(54) **Sicherheits-Bremsvorrichtung eines Schiebedachdeckels**
Safety brake device for the panel of a sliding roof
Dispositif de freinage de sécurité pour le panneau d'un toit ouvrant

(43) Veröffentlichungstag der Anmeldung: 02.04.2008
(73) Patentinhaber: ArvinMeritor GmbH, 63128 Dietzenbach (DE)
(72) Erfinder: Ketelsen, Morten, 64839 Münster (DE); Peter, Roland, 64291 Darmstadt (DE)
(74) Vertreter: Prinz & Partner

(56) Entgegenhaltungen:
- EP-A2- 1 044 837
- DE-A1-102004 003 911
- DE-B3- 10 325 327

## Beschreibung

Die Erfindung betrifft eine Sicherheits-Bremsvorrichtung eines Schiebedachdeckels, gemäß dem Oberbegriff von Anspruch 1.

Solche Sicherheits-Bremsvorrichtungen sollen den ausgefahrenen oder zumindest teilweise geöffneten Deckel bei einem Unfall abrupt vor einer großen Relativverschiebung zum Fahrzeug blockieren. Diese Sicherheits-Bremsvorrichtungen müssen schnell ansprechen und vor allem eine ausfallfreie Auslösesicherheit bieten.

Eine Sicherheits-Bremsvorrichtung ist aus der DE 103 25 327 B3 bekannt, bei der in einem Antriebsstrang zwischen dem Antrieb und dem Deckel eine Sollbruchstelle vorgesehen ist, die ab einem hohen Beschleunigungswert abgeschert wird und damit die Verbindung zwischen Deckel und Antrieb unterbricht, um den Deckel freizugeben und mit der Bremsvorrichtung in Eingriff zu bringen.

Die EP 1 044 837 A2 zeigt eine gattungsgemäße Bremsvorrichtung eines Schiebedachelements mit wenigstens einem mit dem Dachelement gekoppelten Führungsteil, das längs einer zugeordneten Führungsschiene zusammen mit dem Dachelement längs verfahrbar ist. Ein mit dem Dachelement verfahrbares Klemmteil ragt in das Führungsteil hinein und verschiebt sich bei einer abrupten Beschleunigung des Dachelements relativ zur Führungsschiene in dem Führungsteil, wodurch sich das Klemmteil und die Führungsschiene verklemmen. Das Dachelement legt bei der Auslösung der Bremsvorrichtung einen gewissen Weg im Wesentlichen ungebremst zurück, bis das Klemmteil an einer Verschiebebahn im Führungsteil so weit verschoben wurde, dass sich das Klemmteil mit der Führungsschiene verklemmt. Die Auslösung der Sperreinrichtung ist abhängig von der Trägheit der Masse des Klemmteils.

Die Erfindung schafft eine Bremsvorrichtung, die noch einfacher auf die gewünschte Auslösekraft abgestimmt werden kann als die im Stand der Technik beschriebene.

Dies wird durch eine Sicherheits-Bremsvorrichtung nach Anspruch 1 erreicht.

Bei der erfindungsgemäßen Bremsvorrichtung bricht das Bremselement nicht in zwei Teile, vielmehr wird das Bremselement durch das in sein Inneres hineinragende Koppelungsteil nach außen so plastisch oder, vorzugsweise, elastisch verformt, daß es zu einer Verklemmung zwischen Bremselement und Führung kommt.

Die Verklemmung mußt nicht zwingend zu einer ausschließlich reibschlüssigen Verklemmung führen. Es ist nämlich auch möglich, daß die Führung Vertiefungen aufweist, in die sich der verformte Teil des Bremselements erstreckt, so daß es bei der Bremsung bzw. Blockierung auch zu einem Formschluß kommen kann.

Um die Verbindung zwischen dem Koppelungsteil und dem Antriebsmittel bei aktivierter Bremsvorrichtung nicht zu hohen Belastungen zu unterwerfen, ist optional angedacht, daß das Bremselement direkt oder indirekt das Antriebsmittel in einer Führung für das Antriebsmittel (normalerweise die Seilführung) klemmt. Dabei ist es möglich, das Bremselement bis zum Antriebsmittel ragen zu lassen. Alternativ könnte das Bremselement das Koppelungsteil verschieben, so daß dieses das Antriebsmittel in seiner Führung klemmt.

Ferner kann es sinnvoll sein, das Bremselement mit einer Doppelfunktion zu versehen, indem es gleichzeitig ein Gleitschlitten zur Bewegungssteuerung des Deckels ist. Diese Gleitschlitten oder Gleitelemente gleiten in den Führungsschienen und steuern insbesondere über Hebel und/oder Kulissen die Ausstellbewegung des Deckels.

Die bevorzugte Ausführungsform sieht vor, daß das Koppelungsteil einen seitlich in das Bremselement ragenden Mitnehmerabschnitt aufweist. Dieser Mitnehmerabschnitt sorgt dann für die Verformung des Bremselements.

Die Verformung wird z.B. dadurch erreicht, daß das Bremselement in Fahrzeuglängsrichtung vor und/oder hinter einem Mitnehmerabschnitt des Koppelungsteils, der in das Bremselement hineinragt, wenigstens einen Fortsatz aufweist. Dieser Fortsatz erstreckt sich in den horizontalen Verschiebeweg des Mitnehmerabschnitts. Das bedeutet nichts anderes als daß dieser Fortsatz der Bewegung des Koppelungsteils aufgrund der Trägheitskräfte bei einem Unfall im Wege steht, so daß der Mitnehmerabschnitt gegen den Fortsatz drückt und diesen und damit die Außenwandung des Bremselements nach außen deformiert.

Eine gute Klemmung wird dadurch erreicht, daß das Bremselement vor und/oder hinter einem Mitnehmerabschnitt des Koppelungsteils, welcher in das Bremselement hineinragt, zwei gegenüberliegende Fortsätze aufweist, z.B. einen oberen und einen unteren Fortsatz, so daß das Bremselement in zwei entgegengesetzte Richtungen verformt wird. Alternativ kann das Koppelungsteil derart in das Bremselement hineinragen, daß eine Klemmung in horizontaler Richtung, quer zur Fahrzeuglängsachse, erfolgt.

Wenn der Fortsatz unmittelbar an den Mitnehmerabschnitt angrenzt, wird die Relativbewegung zwischen Bremselement und Koppelungsteil sehr gering. Darüber hinaus werden Klappergeräusche bei normalem Fahrbetrieb verhindert.

Die Ausnehmung im Bremselement ist beispielsweise ein Langloch, welches vor wenigstens einem in Fahrtrichtung axialen Ende des Langlochs durch den wenigstens einen Fortsatz eingeengt wird. Hinter diesem Fortsatz weitet sich das Langloch wieder auf.

Die Höhe der Ausnehmung im Bremselement entspricht insbesondere der Bauhöhe des in die Ausnehmung hineinragenden Mitnehmabschnitts des Koppelungsteils. Auch damit werden Klappergeräusche vermieden. Ferner ist eine gute Ausrichtung von Bremselement und Koppelungsteil sichergestellt.

Um die Klemmwirkung zu verbessern, kann das Koppelungsteil auf seiner der Führung zugewandten Außenseite eine Bremsrippe aufweisen. Diese Bremsrippe liegt insbesondere im Bereich eines Fortsatzes.

Eine leichte Herstellbarkeit des Bremselements wird erreicht, wenn dieses aus Kunststoff ausgebildet ist. Bei dieser Ausführung lassen sich auch ohne Zusatzteile Rückstellkräfte bilden, die z.B. nach einer Vollbremsung nötig sind, um die Ausgangslage des Koppelungsteils zum Bremselement wieder herzustellen, da möglicherweise bereits bei einer Vollbremsung eine gewisse Klemmwirkung auftreten kann oder soll.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Draufsicht auf ein Fahrzeugschiebedach mit einem Deckel, der über eine erfindungsgemäße Sicherheits-Bremsvorrichtung gesichert ist, und
- Figur 2 eine perspektivische Schnittansicht durch die Führung eines Deckels im Bereich der erfindungsgemäßen Bremsvorrichtung.

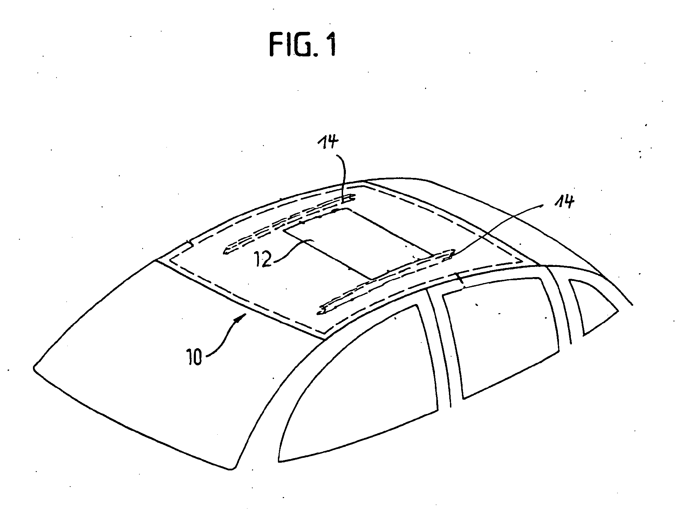

In Figur 1 ist ein Fahrzeugdach 10, insbesondere ein Dachmodul, dargestellt, das mit einem verfahrbaren Deckel 12 versehen ist, der eine dem Deckel 12 entsprechend große, unter ihm liegende Dachöffnung freilegen und schließen kann.

Das Fahrzeugdach 10 kann ein Schiebe-Hebe-Dach sein, bei dem der Deckel an seiner Hinterkante wahlweise ausgestellt und unter die hinter ihm liegende feste Dachhaut verschoben werden kann, oder z.B. ein Spoilerdach, bei dem der Deckel ausgestellt und über die hintere, feststehende Dachhaut verschoben werden kann.

Der Deckel 12 wird in seitlichen Führungen 14 geführt, wie es im Stand der Technik üblich ist. Hierzu sind vorzugsweise im Deckel geführte Gleitschlitten 16 vorgesehen, mit denen der Deckel 12 direkt oder indirekt gekoppelt ist und die beispielsweise über Hebel- oder Kulissenführungen die Bewegung des Deckels in vertikaler und horizontaler Richtung steuern.

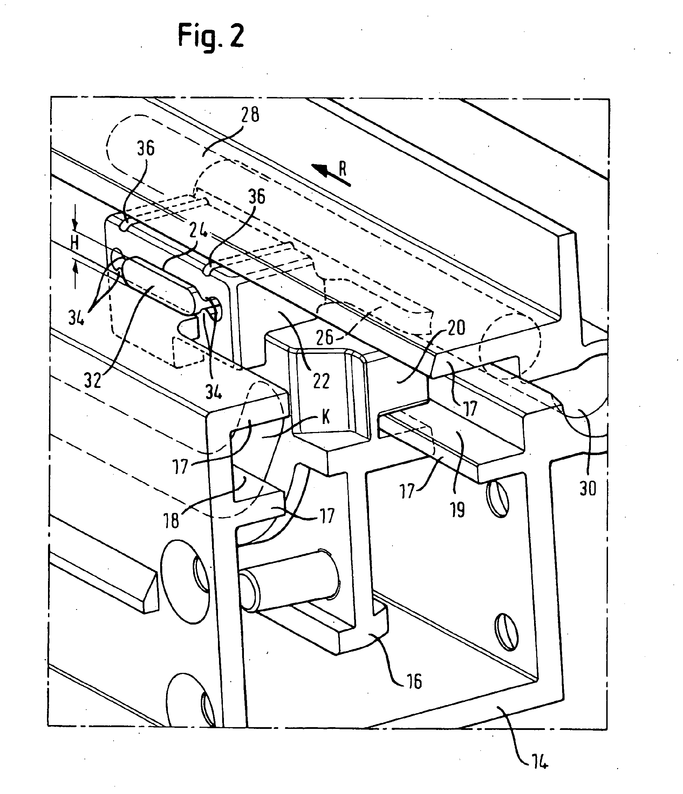

In Figur 2 ist eine U-förmige Führung 14 dargestellt. In dieser Führung 14 läuft ein Gleitschlitten 16, der aus Kunststoffmaterial besteht, vorzugsweise sogar ausschließlich aus Kunststoffmaterial. Dieser Gleitschlitten 16 ist langgestreckt und hat eine Kulisse K, über die die Ausstellbewegung des Deckels 12 an seinem hinteren Rand gesteuert wird.

Die Führung 14 hat an den oberen Enden ihrer beiden Schenkel eine F-förmige Gestalt, so daß sich über je zwei Schienen 17 eine linke und rechte Führung 18 bzw. 19 ergibt, in die jeweils ein Ausläufer 20 des Gleitschlittens 16 ragt. Für die linke Führung 18 ist der entsprechende Ausleger nicht zu sehen.

Der Gleitschlitten 16 hat im Bereich seines oberen Endes einen angeformten Aufsatz, der als Bremselement 22 bezeichnet wird. Das Bremselement 22 kann einstückig mit dem Gleitschlitten 16 ausgeführt sein, also Teil desselben bilden, oder der Gleitschlitten 16 kann mehrstückig ausgeführt sein, wobei ein Teil das Bremselement 22 bildet.

Das Bremselement 22 ragt ebenfalls zumindest teilweise zwischen die Schienen 17 der Führung 19.

Ein in horizontaler Richtung gestreckt verlaufendes Langloch 24 im Bremselement 22 dient zur Aufnahme eines Koppelungsteils 26, das unmittelbar mit einem Antriebsmittel 28 in Form eines Seiles verbunden ist, welches in einer entsprechenden Seilführung 30 drucksteif in der Führung 14 geführt wird. Dieses Antriebsmittel 28 wird durch einen Elektromotor angetrieben und bewegt sämtliche Gleitschlitten, die für die Steuerung der Bewegung des Deckels 12 verantwortlich sind.

Das Koppelungsteil 26 ist insbesondere aus Kunststoff und unmittelbar auf das Antriebsmittel 28 angespritzt. Auch eine Metallausführung ist natürlich möglich. Vom Koppelungsteil 26 steht seitlich ein Mitnehmerabschnitt 32 ab, der in seiner Höhe H und seiner Form der Höhe H des Langlochs 24 angepaßt ist, in dieses ragt und es fast komplett ausfüllt. In Fahrtrichtung R vor und hinter dem Mitnehmerabschnitt 32 wird das Langloch 24 verengt, indem von oben und unten vertikale, einstückig an das Bremselement 22 angeformte Fortsätze 34 mit gerundetem oder trapezförmigem Querschnitt in das Langloch 24 und damit den Verschiebeweg des Mitnehmerabschnitts 32 ragen. Diese Fortsätze 34 sind aber von den in Fahrtrichtung axialen Enden des Langlochs 24 beabstandet, so daß sich das Langloch 24 jeweils zwischen den Fortsätzen 34 und dem entsprechenden axialen Ende noch einmal zu seiner ursprünglichen Höhe aufweitet. Der Mitnehmerabschnitt 32 hat axial abgerundete Enden, die aber auch keilförmig verlaufen können.

Die in Figur 2 gezeigte Anordnung mit der Führung 14, dem Gleitschlitten 16 und seinem Bremselement 22 sowie dem Koppelungsteil 26 bildet eine Sicherheits-Bremsvorrichtung für den Deckel 12. Diese Bremsvorrichtung soll bei einem Unfall den Deckel 12 relativ zur Führung 14 lagesichern.

Im nicht ausgelöstem Zustand der Bremsvorrichtung, bei ganz normalem Fahrbetrieb und auch während der Ausstell- und Verfahrbewegungen des Deckels 12 liegen die Fortsätze 34 an dem Mitnehmerabschnitt 32 an.

Bei einem Unfall (insbesondere Frontalaufprall oder Heckaufprall), oder gegebenenfalls auch bei einer Vollbremsung kommt es aufgrund der großen trägen Masse des Deckels 12 bei feststehendem Antriebsmittel 26 und feststehendem Gleitschlitten 16 zu einer Relativbewegung zwischen diesen Teilen. Der Deckel 12 nimmt dabei das Antriebsmittel 28 und dieses wiederum das Koppelungsteil 26 mit. Der Mitnehmabschnitt 32 fährt gegen die Fortsätze 34 auf der entsprechenden Seite und schiebt sich zwischen diese. Dadurch wird das Bremselement 22 in vertikaler Richtung, vorzugsweise plastisch, verformt und beult nach oben und nach unten aus. Dadurch verklemmt sich das Bremselement 22 in der rechten Führung 19, so daß keine weitere Bewegung des Gleitschlittens 16 und damit auch des Deckels 12 mehr möglich ist.

Zur Verbesserung der Klemmwirkung besitzt das Bremselement 22 im Bereich der Fortsätze 34 nach oben ragende Bremsrippen 36. An den beiden seitlichen Führungen 14 sind im übrigen Bremsvorrichtungen vorgesehen.

Wenn die Belastung zwischen dem Antriebsmittel 28 und dem Koppelungsteil 26 beim Blockieren des Bremselementes 22 zu hoch werden sollte, könnte das Antriebsmittel 28 samt Deckel ungebremst durchrutschen. Deshalb ist auf die Verbindung zwischen Antriebsmittel 28 und Koppelungsteil 26 besonders zu achten. Als zusätzliche Sicherung kann das Bremselement 22 entweder selbst, z.B. über einen Ausleger oder über das Koppelungsteil 26, eine seitliche Kraft auf das Antriebsmittel 28 ausüben, so daß dieses in der Seilführung 30 bei einem Unfall geklemmt wird. Hierzu könnten beispielsweise das Langloch 24 oder die Fortsätze 34 in Draufsicht gesehen einen nach außen zulaufenden Keil beschreiben, wobei der Mitnehmerabschnitt 32 ebenfalls als, in Draufsicht, dreiecksförmiger Keil ausgeführt wäre. Bei einer Relativbewegung würde dann das Bremselement 22 einerseits nach oben und unten aufgrund der Verschiebung des Mitnehmerabschnitts 32 ausbauchen, und auf der anderen Seite würde der Mitnehmerabschnitt 32 aufgrund des Keils in Richtung Seilführung 30 gedrängt werden, um das Seil darin zu klemmen.

Auch wäre es möglich, den Mitnehmerabschnitt 32 über ein Art Kulisse mit dem Bremselement 32 zu koppeln, so daß eine seitliche Verschiebung des Bremselements 22 relativ zum Koppelungsteil 26 zusätzlich zur Verklemmung des Bremselements 22 in der Führung 19 erfolgt. Diese seitliche Verschiebung kann dann dazu führen, daß das Bremselement 22 z.B. über einen in die Seilführung 30 hineinragenden Fortsatz das Antriebsmittel 28 in der Seilführung 30 klemmt oder daß der Mitnehmerabschnitt 32 mit dem Rest des Koppelungsteils 26 in Richtung Seilführung 30 gedrückt wird, um das Antriebsmittel 28 in der Seilführung 30 zu verkeilen oder verklemmen.

### Bezugszeichenliste

- 10: Fahrzeugdach
- 12: Deckel
- 14, 18, 19: Führung
- 16: Gleitschlitten
- 17: Schienen
- 20: Ausläufer
- 22: Bremselement
- 24: Langloch
- 26: Koppelungsteil
- 28: Antriebsmittel
- 30: Seilführung
- 32: Mitnehmerabschnitt
- 34: Fortsätze
- 36: Bremsrippen

## Patentansprüche

1. Sicherheits-Bremsvorrichtung eines Schiebedachdeckels (12), der längs fahrzeugfester Führungen verfahrbar ist, mit
wenigstens einem mit dem Deckel (12) gekoppelten Bremselement (22), das längs einer zugeordneten Führung (14, 18, 19) im Normalbetrieb zusammen mit dem Deckel (12) längsverfahrbar ist,
mit einem mit dem Deckel (12) verfahrbaren, eine Verbindung zwischen Deckel (12) und Bremselement (22) herstellenden Koppelungsteil (26),
das in das Bremselement (22) hineinragt und sich bei einer abrupten Beschleunigung des Deckels (12) relativ zur Führung (14, 18, 19) in dem Bremselement (22) verschiebt,
**dadurch gekennzeichnet, dass**
das Koppelungsteil (26) unmittelbar an einem Antriebsmittel (28) des Deckels (12) angebracht ist und bei seiner Verschiebung in dem Bremselement (22) dieses so verformt, dass sich Bremselement (22) und Führung (14, 18, 19) verklemmen.

2. Sicherheits-Bremsvorrichtung nach Anspruch 1, **dadurch gekennzeichnet, dass** bei betätigter Sicherheits-Bremsvorrichtung das Bremselement (22) das Antriebsmittel (28) in einer Führung (30) für das Antriebsmittel (28) klemmt.

3. Sicherheits-Bremsvorrichtung nach einem der vorhergehenden Ansprüche, **dadurch gekennzeichnet, dass** das Bremselement (22) ein Gleitschlitten (16) zur Bewegungssteuerung des Deckels (12) ist.

4. Sicherheits-Bremsvorrichtung nach einem der vorhergehenden Ansprüche, **dadurch gekennzeichnet, dass** über das Bremselement (22) die Ausstellkräfte auf den Deckel (12) übertragen werden.

5. Sicherheits-Bremsvorrichtung nach einem der vorhergehenden Ansprüche, **dadurch gekennzeichnet, daß** das Koppelungsteil (26) einen seitlich in das Bremselement (22) ragenden Mitnehmerabschnitt (32) aufweist.

6. Sicherheits-Bremsvorrichtung nach Anspruch 5, **dadurch gekennzeichnet, daß** das Koppelungsteil (26) einen in horizontaler Richtung länglichen Mitnehmerabschnitt (32) aufweist, mit dem es in das Bremselement (22) ragt.

7. Sicherheits-Bremsvorrichtung nach einem der vorhergehenden Ansprüche, **dadurch gekennzeichnet, daß** das Bremselement (22) in Fahrzeuglängsrichtung vor und/oder hinter einem Mitnehmerabschnitt (32) des Koppelungsteil (26), welcher in das Bremselement (22) hineinragt, wenigstens einen Fortsatz (34) aufweist, der sich in den horizontalen Verschiebeweg des Mitnehmerabschnitts (32) erstreckt.

8. Sicherheits-Bremsvorrichtung nach einem der vorhergehenden Ansprüche, **dadurch gekennzeichnet, daß** das Bremselement (22) vor und/oder hinter einem Mitnehmerabschnitt (32) des Koppelungsteils (26), der in das Bremselement (22) hineinragt, zwei gegenüberliegende Fortsätze (34) aufweist.

9. Sicherheits-Bremsvorrichtung nach Anspruch 7 oder 8, **dadurch gekennzeichnet, daß** der oder die Fortsätze (34) unmittelbar an den Mitnehmerabschnitt (32) bei nicht ausgelöster Bremsvorrichtung angrenzen und ihn vorzugsweise kontaktieren.

10. Sicherheits-Bremsvorrichtung nach einem der Ansprüche 7 bis 9, **dadurch gekennzeichnet, daß** die Ausnehmung im Bremselement (22) ein Langloch (24) ist, welches vor wenigstens einem seiner in Fahrtrichtung axialen Enden und mit Abstand von diesem durch den wenigstens einen Fortsatz (34) eingeengt ist.

11. Sicherheits-Bremsvorrichtung nach einem der Ansprüche 7 bis 10, **dadurch gekennzeichnet, daß** die Höhe (H) der Ausnehmung im Bremselement (22) der Bauhöhe (H) des in die Ausnehmung hineinragenden Mitnehmerabschnitts (32) des Koppelungsteils (26) entspricht.

12. Sicherheits-Bremsvorrichtung nach einem der vorhergehenden Ansprüche, **dadurch gekennzeichnet, daß** das Bremselement (22) auf seiner der Führung (19) zugewandten Außenseite eine Bremsrippe (36) aufweist.

13. Sicherheits-Bremsvorrichtung nach Anspruch 12 und zusätzlich nach einem der Ansprüche 7 bis 11, **dadurch gekennzeichnet, daß** die Bremsrippe (36) im Bereich eines Fortsatzes (34) liegt.

14. Sicherheits-Bremsvorrichtung nach einem der vorhergehenden Ansprüche, **dadurch gekennzeichnet, daß** das Bremselement (22) aus Kunststoff ist.

## Claims

1. Safety brake apparatus for a sliding-roof panel (12) which can be displaced along guides which are fixed on the vehicle, having
at least one brake element (22) which is coupled to the panel (12) and can be displaced longitudinally together with the panel (12) along an associated guide (14, 18, 19) during normal operation,
having a coupling part (26) which can be displaced with the panel (12) and produces a connection between the panel (12) and the brake element (22),
which coupling part (26) protrudes into the brake element (22) and, in the case of an abrupt acceleration of the panel (12) relative to the guide (14, 18, 19), is displaced in the brake element (22),
**characterized in that**
the coupling part (26) is attached directly to a drive means (28) of the panel (12) and, when it is displaced in the brake element (22), deforms the latter in such a way that the brake element (22) and the guide (14, 18, 19) jam.

2. Safety brake apparatus according to Claim 1, **characterized in that**, when the safety brake apparatus is actuated, the brake element (22) clamps the drive means (28) in a guide (30) for the drive means (28).

3. Safety brake apparatus according to one of the preceding claims, **characterized in that** the brake element (22) is a sliding carriage (16) for the movement control of the panel (12).

4. Safety brake apparatus according to one of the preceding claims, **characterized in that** the deployment forces are transmitted to the panel (12) via the brake element (22).

5. Safety brake apparatus according to one of the preceding claims, **characterized in that** the coupling part (26) has a driver portion (32) which projects laterally into the brake element (22).

6. Safety brake apparatus according to Claim 5, **characterized in that** the coupling part (26) has a driver portion (32) which is elongate in the horizontal direction and with which it projects into the brake element (22).

7. Safety brake apparatus according to one of the preceding claims, **characterized in that**, in front of and/or behind, in the longitudinal direction of the vehicle, a driver portion (32) of the coupling part (26), which driver portion (32) protrudes into the brake element (22), the brake element (22) has at least one projection (34) which extends in the horizontal displacement path of the driver portion (32).

8. Safety brake apparatus according to one of the preceding claims, **characterized in that**, in front of and/or behind a driver portion (32) of the coupling part (26), which driver portion (32) protrudes into the brake element (22), the brake element (22) has two projections (34) which lie opposite one another.

9. Safety brake apparatus according to Claim 7 or 8, **characterized in that** the projection (34) or projections (34) directly adjoins/adjoin the driver portion (32) when the brake apparatus is not triggered and preferably makes/make contact with it.

10. Safety brake apparatus according to one of Claims 7 to 9, **characterized in that** the recess in the brake element (22) is a slot (24) which is constricted by the at least one projection (34) in front of at least one of its axial ends in the driving direction and at a spacing from the said end.

11. Safety brake apparatus according to one of Claims 7 to 10, **characterized in that** the height (H) of the recess in the brake element (22) corresponds to the overall height (H) of the driver portion (32) of the coupling part (26), which driver portion (32) protrudes into the recess.

12. Safety brake apparatus according to one of the preceding claims, **characterized in that** the brake element (22) has a brake rib (36) on its outer side which faces the guide (19).

13. Safety brake apparatus according to Claim 12 and additionally according to one of Claims 7 to 11, **characterized in that** the brake rib (36) lies in the region of a projection (34).

14. Safety brake apparatus according to one of the preceding claims, **characterized in that** the brake element (22) is made from plastic.

## Revendications

1. Dispositif de freinage de sécurité du panneau d'un toit ouvrant (12), qui peut être déplacé le long de glissières fixées au véhicule, comprenant
au moins un élément de frein (22) accouplé au panneau (12), qui peut être déplacé longitudinalement le long d'une glissière associée (14, 18, 19) pendant un fonctionnement normal conjointement avec le panneau (12),
une partie d'accouplement (26) déplaçable avec le panneau (12), établissant une liaison entre le panneau (12) et l'élément de frein (22),
qui pénètre dans l'élément de frein (22) et se déplace dans l'élément de frein (22) dans le cas d'une accélération soudaine du panneau (12) par rapport à la glissière (14, 18, 19),
**caractérisé en ce que**
la partie d'accouplement (26) est montée directement sur un moyen d'entraînement (28) du panneau (12) et dans le cas de son déplacement dans l'élément de frein (22), déforme ce dernier de telle sorte que l'élément de frein (22) et la glissière (14, 18, 19) se bloquent.

2. Dispositif de freinage de sécurité selon la revendication 1, **caractérisé en ce que** lorsque le dispositif de freinage de sécurité est activé, l'élément de frein (22) bloque le moyen d'entraînement (28) dans une glissière (30) pour le moyen d'entraînement (28).

3. Dispositif de freinage de sécurité selon l'une quelconque des revendications précédentes, **caractérisé en ce que** l'élément de frein (22) est un chariot coulissant (16) pour la commande du déplacement du panneau (12).

4. Dispositif de freinage de sécurité selon l'une quelconque des revendications précédentes, **caractérisé en ce que** les forces de sortie sont transmises au panneau (12) par le biais de l'élément de frein (22).

5. Dispositif de freinage de sécurité selon l'une quelconque des revendications précédentes, **caractérisé en ce que** la partie d'accouplement (26) présente une portion d'entraînement (32) pénétrant latéralement l'élément de frein (22).

6. Dispositif de freinage de sécurité selon la revendication 5, **caractérisé en ce que** la partie d'accouplement (26) présente une portion d'entraînement (32) allongée dans la direction horizontale, avec laquelle elle pénètre dans l'élément de frein (22).

7. Dispositif de freinage de sécurité selon l'une quelconque des revendications précédentes, **caractérisé en ce que** l'élément de frein (22) présente, dans la direction longitudinale du véhicule devant et/ou derrière une portion d'entraînement (32) de la partie d'accouplement (26), qui pénètre dans l'élément de frein (22), au moins une saillie (34) qui s'étend dans la trajectoire de déplacement horizontale de la portion d'entraînement (32).

8. Dispositif de freinage de sécurité selon l'une quelconque des revendications précédentes, **caractérisé en ce que** l'élément de frein (22) présente, devant et/ou derrière une portion d'entraînement (32) de la partie d'accouplement (26), qui pénètre dans l'élément de frein (22), deux saillies opposées (34).

9. Dispositif de freinage de sécurité selon la revendication 7 ou 8, **caractérisé en ce que** la ou les saillies (34) sont immédiatement adjacentes à la portion d'entraînement (32) lorsque le dispositif de freinage n'est pas déclenché et sont de préférence en contact avec lui.

10. Dispositif de freinage de sécurité selon l'une quelconque des revendications 7 à 9, **caractérisé en ce que** l'évidement dans l'élément de frein (22) est un trou oblong (24), qui est rétréci avant au moins l'une de ses extrémités axiales dans la direction de conduite et à distance de celle-ci, par l'au moins une saillie (34).

11. Dispositif de freinage de sécurité selon l'une quelconque des revendications 7 à 10, **caractérisé en ce que** la hauteur (H) de l'évidement dans l'élément de frein (22) correspond à la hauteur de construction (H) de la portion d'entraînement (32) de la partie d'accouplement (26) pénétrant dans l'évidement.

12. Dispositif de freinage de sécurité selon l'une quelconque des revendications précédentes, **caractérisé en ce que** l'élément de frein (22) présente sur son côté extérieur tourné vers la glissière (19) une nervure de frein (36).

13. Dispositif de freinage de sécurité selon la revendication 12, et en outre selon l'une quelconque des revendications 7 à 11, **caractérisé en ce que** la nervure de frein (36) est située dans la région d'une saillie (34).

14. Dispositif de freinage de sécurité selon l'une quelconque des revendications précédentes, **caractérisé en ce que** l'élément de frein (22) est en plastique.
